# EUROPEAN PATENT APPLICATION

(11) **EP 3 936 293 A1**
(43) Date of publication of application: **12.01.2022**
(21) Application number: 20766343.6
(22) Date of filing: 20.02.2020
(51) Int. Cl.: B27M 3/00

(54) **SPLICED WOOD**

(30) Priority: 06.03.2019 CN 201910169473; 06.03.2019 CN 201920283413 U
(71) Applicant: Gted-X Pte Ltd., Shanghai 200062 (CN)
(72) Inventor: WU, Jun, Shanghai 200062 (CN)
(74) Representative: Noble, Nicholas
(86) International application number: PCT/CN2020/075927
(87) International publication number: WO 2020/177535

(57) **Abstract**

Spliced wood, comprising a plurality of splicing members (1) and a plurality of connecting members (2); each splicing member (1) comprises atop surface (11), a bottom surface (12), and several side surfaces (13) connected between the top surface (11) and the bottom surface (12), each side surface (13) is provided with a slot (10), and the slots on any two adjacent side surfaces (13) intersect at a common edge (15) of the two adjacent side surfaces; each connecting member (2) has a first connecting part (21) and a second connecting part (22) connected to each other, the first connecting part (21) is adapted to be inserted into the slot of one splicing member, and the second connecting part (22) is adapted to be inserted into the slot of the other splicing member.

## Description

### TECHNICAL FIELD

The present disclosure relates to a wooden splicing board.

### BACKGROUND

Wood is becoming an increasingly scarce and more expensive raw material for building and manufacturing furniture. For example, natural wood is the best type of wood used in cabinet making and furniture, because it has the best features and characteristics. However, due to excessive logging of existing resources, and the long growth time required by most trees, solid wood has become scarce and expensive. As more and more forests in the world are consumed, more and more people have to use woods of lower quality than the solid wood to build or manufacture furniture. For example, various composite boards, such as particle board, plywood, and medium density fiberboard, are widely used even if they do not provide the aesthetic appeal or strength of solid wood.

The conventional manufacturing process can only use 35-40% of wood logs, resulting in a large amount of waste of expensive natural wood. That is to say, through the conventional manufacturing process, most of the wood log materials cannot be converted into commercially valuable wood/materials. In order to improve the utilization rate of wood, in the prior art, wood waste materials are manufactured into several splicing pieces, and then the splicing pieces are spliced together to form a wooden splicing board with a large area. However, the quality and structural strength of the wooden splicing boards in the prior art are low, which cannot meet the needs of customers.

### SUMMARY

Based on this, a new type of wooden splicing board is provided to solve the problems of wood waste, low quality and structural strength of the wooden splicing board in the prior art.

In one aspect, the present disclosure provides a wooden splicing board including a plurality of splicing pieces and a plurality of connecting pieces; each of the splicing pieces includes: a top surface, a bottom surface, and several side surfaces connected between the top surface and the bottom surface, each of the side surfaces is provided with a slot, and the slots in any two adjacent side surfaces intersect each other at a common edge of the two adjacent side surfaces; each of the connecting pieces has a first connecting portion and a second connecting portion connected to each other, and the first connecting portion is adapted to be inserted into a slot of one of the splicing pieces, the second connecting portion is adapted to be inserted into a slot of another splicing piece.

Further, at least the bottom surface and each of the side surfaces are planar structures; the common edges are perpendicular to the bottom surface, and extension directions of the slots are parallel to the bottom surface; a side surface where the slot into which the first connecting portion is inserted is located abuts on a side surface where the slot into which the second connecting portion is inserted is located.

Further, in each of the splicing pieces, a distance from the slots to the bottom surface is the same.

Further, the side surfaces of each of the splicing pieces are plane structures perpendicular to an extension plane of the wooden splicing board; the common edges are perpendicular to the extension plane, and extension directions of the slots are parallel to the extension plane; the side surface where the slot into which the first connecting portion is inserted is located abuts on the side surface where the slot into which the second connecting portion is inserted is located.

Further, the top surface of the wooden splicing board is a non-planar structure, and/or the bottom surface of the wooden splicing board is a non-planar structure.

Further, each of the slots is glued to the corresponding first connecting portion or second connecting portion.

Further, each of the splicing pieces is configured as a regular polygonal splicing piece; or, the plurality of the splicing pieces include several rectangular splicing pieces and several parallelogram splicing pieces; or, the plurality of the splicing pieces include several rectangular splicing pieces and several rhombic splicing pieces; or, each of the splicing pieces is configured as the rhombic splicing piece; or, the plurality of the splicing pieces include several triangular splicing pieces, several rhombic splicing pieces, and several parallelogram splicing pieces; or, each of the splicing pieces is configured as an irregular polygonal splicing piece.

Further, each of the splicing pieces is configured as a regular polygonal splicing piece; or, the plurality of the splicing pieces include several irregular polygonal splicing pieces and several regular polygonal splicing pieces.

Further, the first connecting portion and the second connecting portion of each of the connecting pieces are respectively configured as dovetail tenons; or, in the plurality of connecting pieces, the first connecting portions of a part of the connecting pieces are configured as dovetail tenons, and the second connecting portions of the part of the connecting pieces (2) are configured as rectangular tenons; the first connecting portions and the second connecting portions of the other part of the connecting pieces are respectively configured as dovetail tenons.

Further, the wooden splicing board forms with several splicing seams that extend along fold lines.

The wooden splicing boards provided by the embodiments of the present disclosure can be assembled into wooden splicing boards with any size as required. Each of the splicing pieces forming the wooden splicing board may be exactly the same, or may have different wood grains, colors, materials, and shapes. During the splicing process, if the connecting piece is broken, it is only needed to be replaced with a new connecting piece. The structure of the splicing piece itself will not be damaged, which is beneficial for reducing the cost and reducing the waste of wood. In addition, the slots in any two adjacent side surfaces intersect each other at the common edge of the two adjacent side surfaces, and the slots do not vertically run through the top and bottom surfaces of each of the splicing pieces, so that the top surface and the bottom surface of the splicing board formed by splicing can bear a relatively large load, thereby improving the structural strength and quality of the wooden splicing board. In addition, because each side surface of each of the splicing pieces is provided with the slot, when the splicing pieces are for example regular polygonal splicing pieces (that is, the top and bottom surfaces of the splicing pieces are regular polygonal shapes with the same size), during splicing, the requirement for the orientation of the splicing piece is lower, which reduces the difficulty of splicing and helps to increase the splicing speed.

### BRIEF DESCRIPTION OF THE DRAWINGS

FIG. 1 schematically shows a partial structure of a wooden splicing board provided by an embodiment of the present disclosure;
FIG. 2 shows structures of a splicing piece and a connecting piece in the wooden splicing board shown in FIG. 1;
FIG. 3 schematically shows a partial structure of a wooden splicing board provided by another embodiment of the present disclosure;
FIG. 4 schematically shows a structure of a wooden splicing board provided by a further embodiment of the present disclosure;
FIG. 5 schematically shows a structure of a wooden splicing board provided by a further embodiment of the present disclosure; and
FIG. 6 schematically shows a structure of a wooden splicing board provided by a further embodiment of the present disclosure.

### DETAILED DESCRIPTION OF THE EMBODIMENTS

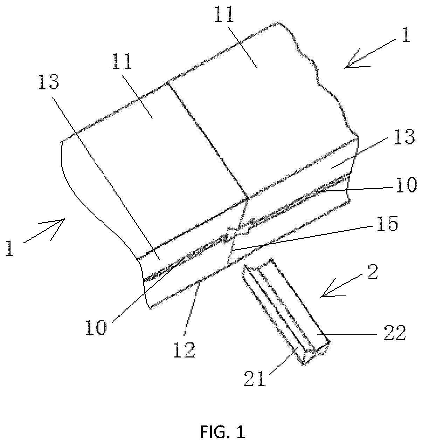

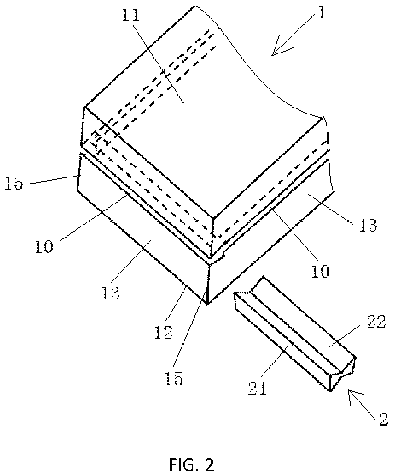

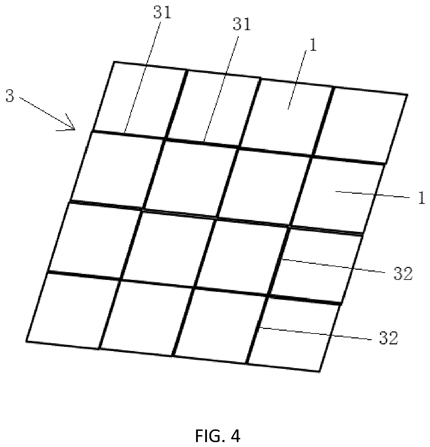

Referring to Fig. 1, a structure of a wooden splicing board provided by an embodiment of the present disclosure is shown. The wooden splicing board includes a plurality of splicing pieces 1 and a plurality of connecting pieces 2 for connecting different splicing pieces 1. Although a part of the wooden splicing board shown in FIG. 1 includes two square splicing pieces 1 and one connecting piece 2, it can be understood that the splicing pieces 1 constituting the wooden splicing board may be any suitable number, and each of the splicing pieces 1 can be configured in any suitable shape, as long as every two adjacent splicing pieces 1 can be connected together by a corresponding connecting piece 2 to be spliced into the wooden splicing board. Each of the splicing piece 1 includes a top surface 11, a bottom surface 12, and a plurality of side surfaces 13 connected between the top surface 11 and the bottom surface 12. Referring to FIGS. 2 and 4 together, each of the side surfaces 13 is provided with a slot 10, and the slots 10 in any two adjacent side surfaces 13 intersect each other at a common edge 15 of the two adjacent side surfaces 13. Each of the connecting pieces 2 has a first connecting portion 21 and a second connecting portion 22 connected to each other, the first connecting portion 21 is adapted to be inserted into the slot 10 of a splicing piece 1, and the second connecting portion 22 is adapted to be inserted into the slot 10 of another splicing piece 1, so that two adjacent splicing pieces 1 are connected together.

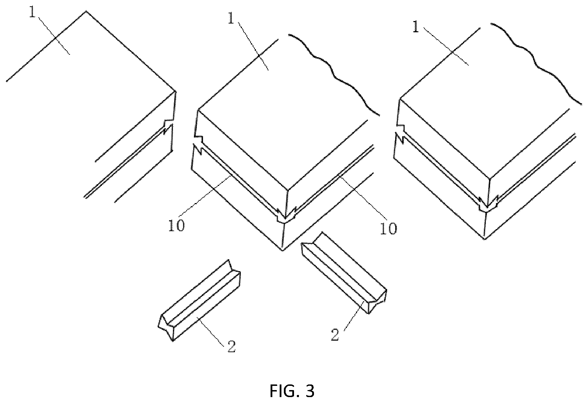

The wooden splicing board provided by an embodiment of the present disclosure, with reference to FIG. 3, can be equipped with any number of splicing pieces 1 and connecting pieces 2 as required. Each of the splicing pieces 1 that composes the wooden splicing board may be exactly the same or may have different wood grain, color, wood material and shape. During the splicing process, if the connecting piece 2 is broken, it is only needed to be replaced with a new connecting piece 2, so that the structure of the splicing piece 1 will not be damaged, which is beneficial for reducing the cost and reducing the waste of wood. In addition, the slots 10 in any two adjacent side surfaces 13 intersect each other at the common edge 15 of the two adjacent side surfaces 13, and each of the slots 10 does not vertically run through the top and bottom surfaces of each of the splicing pieces 1, so that the top surface and the bottom surface of the wooden splicing board formed by splicing can bear a relatively large load, thereby improving the structural strength and quality of the wooden splicing board. In addition, in some embodiments of regular polygonal splicing pieces (that is, the top surface 11 and the bottom surface 12 of the splicing piece 1 are regular polygonal shapes with the same size), since each of the side surfaces 13 of the splicing piece 1 is provided with the slot 10, during splicing, the requirement for the orientation of the splicing piece 1 is lower, which reduces the difficulty of splicing and helps to increase the splicing speed.

As can be seen from FIGS. 1 to 3, in some embodiments, at least the bottom surface 12 and the side surfaces 13 of each of the splicing pieces 1 are planar structures, each of the common edges 15 is perpendicular to the bottom surface 12, and the extension direction of each of the slots 10 is parallel to the bottom surface 12. That is, each of the splicing pieces 1 is a polygonal structure, and the outer peripheral contours of the top surface 11 and the bottom surface 11 of each of the splicing pieces 1 are polygonal shapes with the same size. In some embodiments, the length of each side of the polygonal shape may be in the range from several centimeters to tens of centimeters. The side surface where the slot into which the first connecting portion 21 is inserted is located abuts on the side surface where the slot into which the second connecting portion 22 is inserted is located. In this way, on one hand, each of the splicing pieces 1 can withstand greater vertical load (force perpendicular to the bottom surface 12) at a connection position, and on the other hand, it can prevent the connecting piece 2 from being exposed and affecting the appearance of the top surface effect of the wooden splicing board.

The thickness of each of the splicing pieces 1 is not limited, and the splicing pieces 1 with the same thickness may be spliced together, or the splicing pieces 1 with multiple thicknesses may be spliced together. In some embodiments, in each of the splicing pieces 1, the distance from the slots 10 to the bottom surface 12 is the same. That is, the distance from each of the slots 10 to the bottom surface 12 in each of the splicing pieces 1 is the same predetermined value, so that the bottom of the spliced wooden splicing board is flat. In some embodiments, the distance from the slots 10 to the top surface 11 or the bottom surface 12 in each of the splicing pieces 1 is not necessarily the same, so that the top or bottom surface of the wooden splicing board is a non-planar structure. For example, an undulating top surface or bottom surface can be spliced by splicing pieces 1 with different thicknesses to achieve a relief-like effect. In some embodiments, the top and bottom surfaces of the wooden splicing board contain non-planar structures. For example, an undulating top surface and bottom surface can be spliced by splicing pieces 1 with different thicknesses to achieve a relief-like effect on the top and bottom surfaces of the wooden splicing board. These embodiments can be used in a situation where relief effects are displayed on both sides, such as a screen.

It can be understood that, in some embodiments, for example, in the event where both the top surface and the bottom surface of the wooden splicing board are not planar structures, the side surfaces of each of the splicing pieces 1 may be planar structures perpendicular to the extension plane of the wooden splicing board. The extension plane is, for example, a horizontal plane or a vertical plane, that is, the splicing boards 1 can be infinitely spliced in the horizontal direction or the vertical direction, so that the area of the wooden splicing boards can be expanded infinitely in the horizontal direction or the vertical direction. Correspondingly, each of the common edges 15 is also perpendicular to the extension plane of the wooden splicing board, and the extension directions of the slot 10 are parallel to the extension plane. It can be understood that, for example, in the event where the bottom surface 12 of each of the splicing pieces 1 is a planar structure and each of the common edges 15 is perpendicular to the bottom surface 12, the extension plane of the wooden splicing board is parallel to the bottom surface of each of the splicing pieces 1.

FIG.s 1 to 3 show a preferred embodiment of the slots 10 and the connecting piece 2, wherein the slots 10 are all dovetail grooves, and the first connecting portion 21 and the second connecting portion 22 of the connecting piece 2 are configured to be dovetail tenons respectively. The first connecting portion 21 and the second connecting portion 22 of the connecting piece 2 are an integral structure. The depth of the slots 10 in the form of dovetail groove is not limited (as long as the first connecting portion 21 or the second connecting portion 22 can be accommodated, and in some embodiments, a small gap can be provided slightly to accommodate glue). A dovetail angle of the slots 10 in the form of dovetail groove needs to be matched with A dovetail angle of the corresponding first connecting portion 21 or second connecting portion 22 in the form of dovetail tenon, and any common dovetail angle can be used for the dovetail angle of the slots 10 and the dovetail angle of the first connecting portion 21 or the second connecting portion 22. It can be understood that, in the case where the thickness of the splicing pieces 1 is small, the depth of the slots 10 and the dovetail angle need to be determined by considering the influence of the groove width of the bottom of the dovetail grooves on the strength of side surfaces of the splicing pieces 1.

In some embodiments, in order to make the connection between each of the slots 10 and the first connecting portion 21 or the second connecting portion 22 of the corresponding connecting piece 2 more reliable, each of the slots 10 can be glued with the first connecting portion 21 or the second connecting portion 22 of the corresponding connecting piece 2 by glue. For example, the glue can be brushed on the connecting piece 2, and then the connecting piece 2 is inserted into the slot 10 of the splicing piece 1; or, the glue can be brushed on the side surfaces of the splicing piece 1 so that the glue enters the slots 10, and then the connecting piece 2 is inserted into the slot 10 of the splicing piece.

In some embodiments, the length of each side of each of the splicing pieces 1 shown in FIGS. 1 to 3 is in the range from about several centimeters to about several tens of centimeters (for example, from 5 cm to 10 cm), and the thickness of each of the splicing pieces 1 is less than one centimeter or in the range from one centimeter to several centimeters (such as 2.0 cm or 2.5 cm). The depth of the dovetail grooves is about several millimeters. The distance between the bottoms of the dovetail grooves of two adjacent splicing pieces 1 is twice the depth of the dovetail grooves. The distance between the two end surfaces of the dovetail tenon that are respectively opposite to the bottom of two dovetail grooves can be slightly less than twice the depth of the dovetail grooves. For example, the depth of the dovetail grooves is 2.5 mm, the distance between the bottoms of the dovetail grooves of two adjacent splicing pieces 1 is 5 mm, the distance between the two end surfaces of the dovetail tenon that are respectively opposite to the bottom of two dovetail grooves is less than 5 mm, such as 4.5 mm or 4.7 mm. That is, a gap of 0.25 mm or less can be provided between each of the dovetail tenons and the bottom of each of the dovetail grooves for storing glue. The splicing pieces 1 and the connecting pieces 2 can be made of very small scrap materials, and the wooden splicing boards of some embodiments can be made of waste materials from conventional wood processing, such as tree roots that cannot be used in conventional wood processing and leftover materials from conventional wood processing, thereby reducing wood waste.

In some embodiments, the length of each side of each of the splicing pieces 1 has been processed when it is used to assemble the wooden splicing boards and will not be changed. The thickness of each of the splicing pieces may be subjected to finishing, such as grinding, planing and the like, before it is used to assemble the wooden splicing boards. The wooden splicing boards may be further processed, such as grinding, planing, painting and the like, after assembly.

In some embodiments, the first connecting portion 21 of the connecting piece 2 is configured as a dovetail tenon, and the second connecting portion 22 of the connecting piece 2 is configured as a rectangular tenon (or called a straight tenon). In assembly, the rectangular tenon can be inserted into a dovetail groove or a rectangular groove. In some embodiments, in a plurality of connecting pieces 2 constituting the wooden splicing board, even if some of the connecting pieces 2 have rectangular tenons, all the slots 10 can be configured as dovetail grooves. In some embodiments, the slots 10 matched with the dovetail tenons can be configured as dovetail grooves correspondingly, and the slots 10 matched with the rectangular tenons can be configured as rectangular grooves correspondingly, and the rectangular tenons can be relatively easily inserted into the rectangular grooves.

It can be understood that, in an embodiment, in the multiple splicing pieces 1 constituting the wooden splicing board, adjacent slots 10 of a part of adjacent splicing pieces 1 can be connected by connecting pieces 2 of which the first connecting portions 21 and the second connecting portions 22 are dovetail tenons, and adjacent slots 10 of remaining other parts of the adjacent splicing pieces 1 can be connected by connecting pieces 2 of which the first connecting portions 21 are dovetail tenons and the second connecting portions 22 are rectangular tenons.

FIGS. 4 to 6 show schematic views of the top surfaces of wooden splicing boards 3 formed by splicing several splicing pieces 1 together through several connecting pieces 2. It can be understood that the top surfaces of the splicing pieces 1 are combined to form the top surface of the wooden splicing board 3. The bottom surfaces of the splicing pieces 1 are combined to form the bottom surface of the wooden splicing board 3.

In the embodiment of the wooden splicing board 3 shown in FIG. 4, each of the splicing pieces 1 is configured as the same parallelogram splicing piece, specifically, each splicing piece 1 is the same parallelogram splicing piece, so that the wooden splicing board 3 is formed with several continuous straight-lined horizontal splicing seams 31 and several continuous straight-lined vertical splicing seams 32. Of course, in other embodiments, each of the splicing pieces 1 may also be a regular polygon structure such as a regular triangle structure, a regular quadrilateral structure, a regular pentagon structure, a regular hexagon structure, a regular octagon structure, and the like.

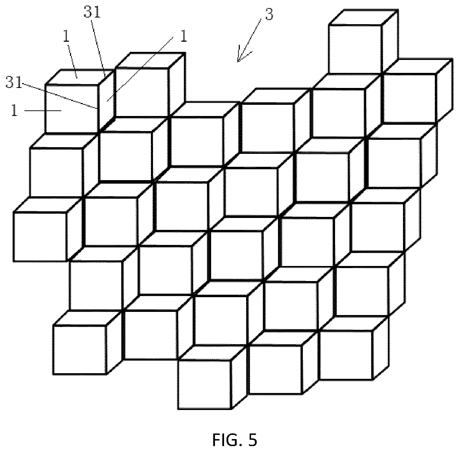

In the embodiment of the wooden splicing board 3 shown in FIG. 5, the plurality of splicing pieces 1 includes several rectangular (or square) splicing pieces and several parallelogram splicing pieces, more specifically, taking a pattern spliced by a rectangular (or square) splicing piece and two parallelogram splicing pieces as a basic unit pattern, the basic unit pattern can be repeated infinitely and any two adjacent splicing pieces 1 in the basic unit patterns are connected together by connecting pieces 2. In this embodiment, the wooden splicing board 3 does not form with any continuous straight-lined splicing seams 31, but forms with several splicing seams 31 that extend along fold lines. The mechanical properties of the wooden splicing board 3 of this structure are more excellent.

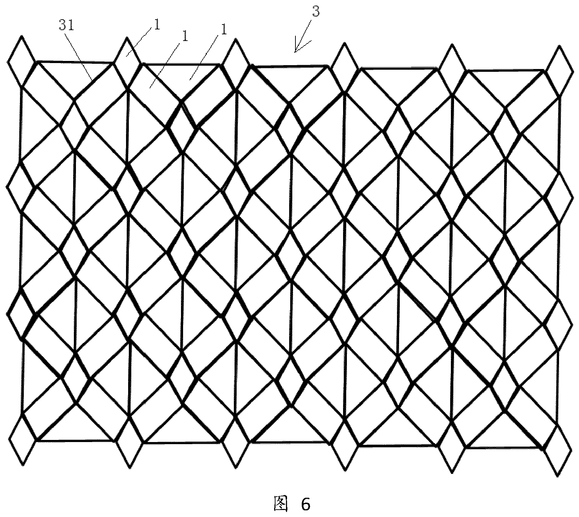

In the embodiment of the wooden splicing board 3 shown in FIG. 6, the plurality of splicing pieces 1 include several triangular splicing pieces, several rhombic splicing pieces and several parallelogram splicing pieces, and every two adjacent splicing pieces 1 are connected by the connecting pieces 2, so that infinite number of patterns can be spliced. The wooden splicing board 3 also forms with several splicing seams 31 that extend along fold lines.

In another embodiment of the wooden splicing board 3 not shown, the plurality of splicing pieces 1 include several irregular pentagonal splicing pieces with the same shape and size, and every two adjacent splicing pieces 1 are connected by connecting pieces 2, so that infinite number of patterns can be spliced. The wooden splicing board 3 also forms with several splicing seams 31 that extend along fold lines.

In another embodiment of the wooden splicing board 3 not shown, the plurality of splicing pieces 1 include several symmetrical pentagons of different shapes, and every two adjacent splicing pieces 1 are connected by connecting pieces 2, infinite number of patterns can be spliced. The wooden splicing board 3 also forms several splicing seams 31 that extend along fold lines.

In other embodiments not shown, the plurality of splicing pieces forming a wooden splicing board 3 may also include several rectangular splicing pieces and several rhombic splicing pieces, and the rectangular splicing pieces and the rhombic splicing pieces are spliced together according to certain rules; or, each of the splicing pieces is configured as the rhombic splicing piece; or, each of the splicing pieces is configured as the irregular polygonal splicing piece. Each of the splicing pieces constituting the wooden splicing board 3 can have a variety of different shapes, sizes, and thicknesses according to the design of the splicing pattern, which will not be listed here.

Generally speaking, the splicing pieces in each of embodiments are all convex polygons, such as triangles, quadrangles, pentagons, hexagons, heptagons, octagons, and the like. In some embodiments, all the splicing pieces can be configured as regular polygonal splicing pieces, regular polygons include: for example, regular polygons, other polygons with symmetrical features (such as symmetrical trapezoids, isosceles triangles, symmetrical pentagons, etc.), rhombuses, parallelograms and the like. In some embodiments, all the splicing pieces can be configured as irregular polygonal splicing pieces, irregular polygons are, for example, polygons without symmetrical features (for example, asymmetrical trapezoids, asymmetrical triangles, asymmetrical pentagons, etc.). It can be understood that all polygons outside the range of regular polygons are irregular polygons. In some embodiments, the plurality of splicing pieces 1 forming a wooden splicing board 3 may include several regular polygonal splicing pieces and several irregular polygonal splicing pieces.

The above-mentioned embodiments only express several implementation modes of the present disclosure, and their descriptions are rather specific and detailed, but they should not be interpreted as a limitation on the protection scope of the present disclosure. It should be pointed out that, to those of ordinary skills in the art, without departing from the concept of the present disclosure, several modifications and improvements can be made, and these all fall within the protection scope of the present disclosure. Therefore, the protection scope of the present disclosure should be subject to the appended claims.

## Claims

1. A wooden splicing board, **characterized in that**, the wooden splicing board comprises a plurality of splicing pieces (1) and a plurality of connecting pieces (2);
each of the splicing pieces (1) comprises: a top surface (11), a bottom surface (12), and several side surfaces (13) connected between the top surface (11) and the bottom surface (12), each of the side surfaces (13) is provided with a slot (10), and the slots in any two adjacent side surfaces (13) intersect each other at a common edge (15) of the two adjacent side surfaces;
each of the connecting pieces (2) has a first connecting portion (21) and a second connecting portion (22) connected to each other, and the first connecting portion (21) is adapted to be inserted into a slot of one of splicing piece, the second connecting portion (22) is adapted to be inserted into a slot of another splicing piece.

2. The wooden splicing board of claim 1, wherein
at least the bottom surface (12) and each of the side surfaces (13) are planar structures; the common edges (15) are perpendicular to the bottom surface (12), and extension directions of the slots (10) are parallel to the bottom surface (12);
a side surface where the slot into which the first connecting portion (21) is inserted is located abuts on a side surface where the slot into which the second connecting portion (22) is inserted is located.

3. The wooden splicing board of claim 2, wherein in each of the splicing pieces (1), a distance from the slots (10) to the bottom surface (12) is the same.

4. The wooden splicing board of claim 1, wherein
the side surfaces of each of the splicing pieces (1) are plane structures perpendicular to an extension plane of the wooden splicing board (3);
the common edges (15) are perpendicular to the extension plane, and extension directions of the slots (10) are parallel to the extension plane;
the side surface where the slot into which the first connecting portion (21) is inserted is located abuts on the side surface where the slot into which the second connecting portion (22) is inserted is located.

5. The wooden splicing board of claim 1 or 2 or 4, wherein the top surface of the wooden splicing board (3) is a non-planar structure, and/or the bottom surface of the wooden splicing board (3) is a non-planar structure.

6. The wooden splicing board of claim 1 or 2 or 4, wherein each of the slots is glued to the corresponding first connecting portion (21) or second connecting portion (22).

7. The wooden splicing board of claim 1 or 2 or 4, wherein each of the splicing pieces (1) is configured as a regular polygonal splicing piece; or, the plurality of the splicing pieces (1) comprise several rectangular splicing pieces and several parallelogram splicing pieces; or, the plurality of the splicing pieces (1) comprise several rectangular splicing pieces and several rhombic splicing pieces; or, each of the splicing pieces (1) is configured as the rhombic splicing piece; or, the plurality of the splicing pieces (1) comprise several triangular splicing pieces, several rhombic splicing pieces, and several parallelogram splicing pieces; or, each of the splicing pieces (1) is configured as an irregular polygonal splicing piece.

8. The wooden splicing board of claim 1 or 2 or 4, wherein each of the splicing pieces (1) is configured as a regular polygonal splicing piece; or, the plurality of the splicing pieces (1) comprise several irregular polygonal splicing pieces and several regular polygonal splicing pieces.

9. The wooden splicing board of claim 1 or 2 or 4, wherein
the first connecting portion (21) and the second connecting portion (22) of each of the connecting pieces (2) are respectively configured as dovetail tenons;
or,
in the plurality of connecting pieces (2), the first connecting portions (21) of a part of the connecting pieces (2) are configured as dovetail tenons, and the second connecting portions (22) of the part of the connecting pieces (2) are configured as rectangular tenons; the first connecting portions (21) and the second connecting portions (22) of the other part of the connecting pieces (2) are respectively configured as dovetail tenons.

10. The wooden splicing board of claim 1, 2 or 4, wherein the wooden splicing board (3) forms with several splicing seams that extend along fold lines.
